# EUROPEAN PATENT APPLICATION

(11) **EP 1 533 106 A2**
(43) Date of publication of application: **25.05.2005**
(21) Application number: 04105718.3
(22) Date of filing: 12.11.2004
(51) Int. Cl.: B29C 65/74, B65B 9/10, B65B 9/13, B65B 51/30

(54) **Product packing assembly, in particular for packing food products**

(30) Priority: 14.11.2003 IT TO20030905
(71) Applicant: OPM S.p.A., 12066 Monticello d'Alba (IT)
(72) Inventor: Nesci, Domenico, 12051, Alba (IT)
(74) Representative: Jorio, Paolo, Dr. Ing.

(57) **Abstract**

An assembly (1) for packing products (2), in particular food products, arranged successively and spaced longitudinally apart inside a tube (3) of packing material travelling along a respective longitudinal axis (4); the assembly (1) has a carriage (14) movable linearly back and forth parallel to the longitudinal axis (4), a first tool (54) carried by the carriage (14) and movable to perform a first packing operation on the tube (3), and at least one second tool (55), which differs from the first tool (54), is also carried by the carriage (14), and is movable to perform a second packing operation; and the first (54) and second (55) tool are activated by respective actuating devices (34, 56), which are carried by the carriage (14) to move together with the carriage (14).

## Description

The present invention relates to a product packing assembly, in particular for packing food products, to which the following description refers purely by way of example.

Packing systems, commonly referred to as "flow-pack" systems, are known, in which the products for packing are arranged spaced apart in a line inside a tube, which is made of a film of packing material, and is fed through sealing and cutting stations to seal and separate packages, each containing a respective product.

To seal and cut the tube, a need is felt for a "tracking" system - i.e. a system in which a carriage supports the packing tools and runs back and forth parallel to the tube - to enable precise, versatile packing regardless of the distance between the products.

More specifically, a need is felt for a tracking-type packing assembly which is relatively straightforward and provides for accurate positioning of the packing tools.

It is an object of the present invention to provide a product packing assembly, in particular for packing food products, designed to meet the above demand in a straightforward, low-cost manner.

According to the present invention, there is provided an assembly for packing products, in particular food products, arranged successively and spaced longitudinally apart inside a tube of packing material travelling along a respective longitudinal axis; characterized by comprising:
- a carriage movable back and forth, parallel to said longitudinal axis, along a forward stroke in the same direction as the travel of said tube, and along a return stroke in the opposite direction to the travel of said tube;
- a first tool carried by said carriage and movable, with respect to said carriage, to perform, along each said forward stroke, a first packing operation on said tube;
- at least one second tool, which differs from said first tool, is carried by said carriage, and is movable, with respect to said carriage, to perform, along each said return stroke, a second packing operation on said tube; and
- actuating means for moving said first and said second tool, respectively, to perform said first and said second packing operation respectively;
at least some of said actuating means being carried by said carriage.

A non-limiting embodiment of the invention will be described by way of example with reference to the accompanying drawings, in which:
Figures 1 and 2 show, respectively, a front view in perspective and a rear view in perspective of a preferred embodiment of the assembly for packing products, in particular food products, according to the present invention;
Figure 3 shows a front view, with parts removed for clarity, of the Figure 1 assembly;
Figure 4 shows a schematic, partly sectioned side view of the Figure 1 assembly.

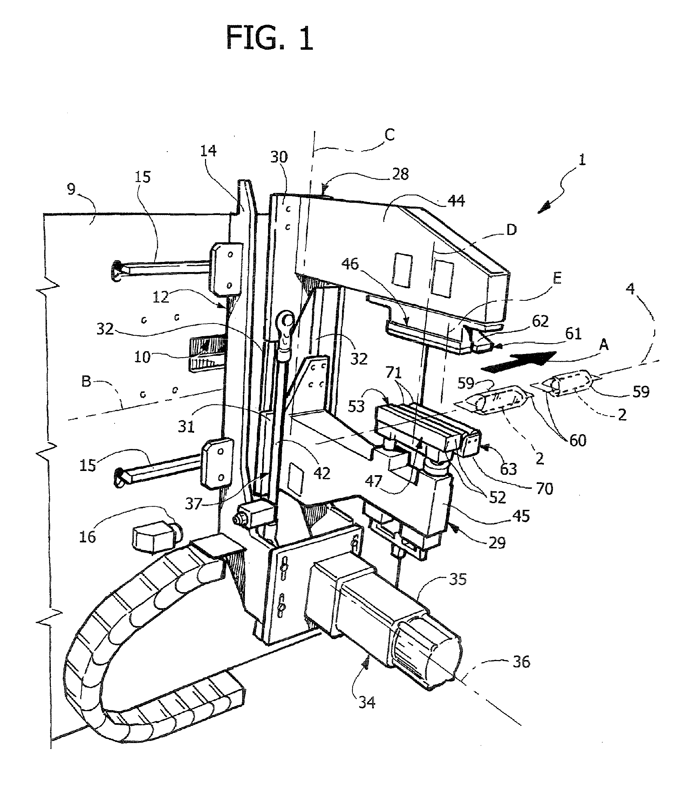

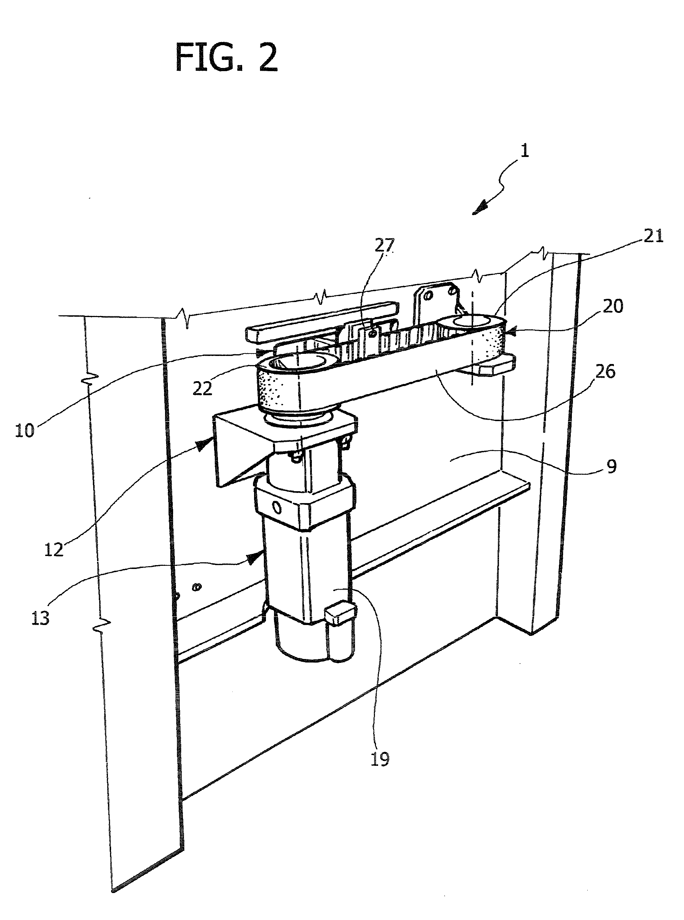

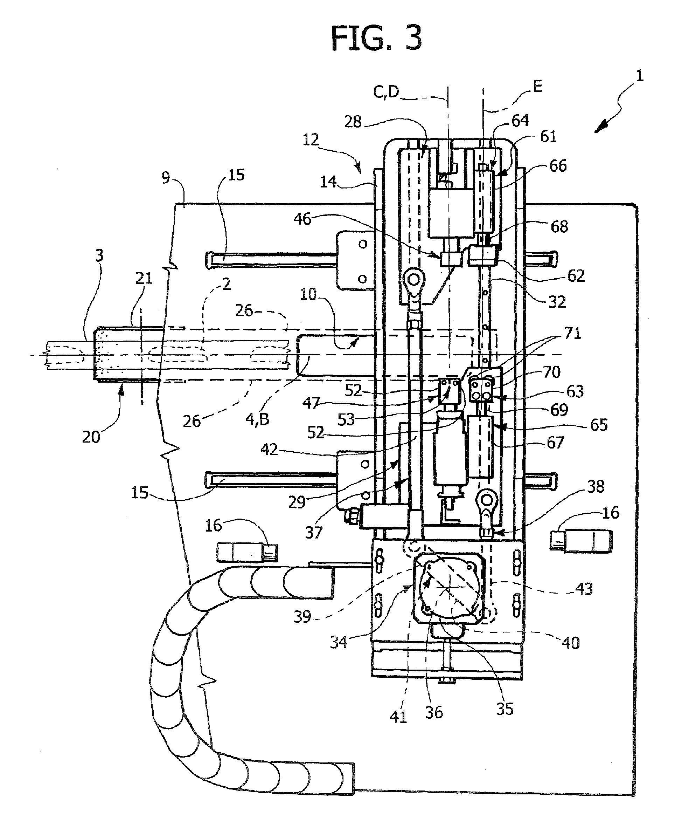

Number 1 in Figures 1 and 2 indicates an assembly for packing products 2 using a so-called "flow-pack" system. Products 2, e.g. food products such as snacks or sliced bread, are arranged successively and spaced apart inside a "tunnel" or tube 3 (shown partly in Figure 3), which is made of packing material, e.g. plastic film, has an axis 4, and is fed, together with products 2 and on a horizontal supporting surface (not shown), along axis 4 in the direction of arrow A by a known drive device not shown.

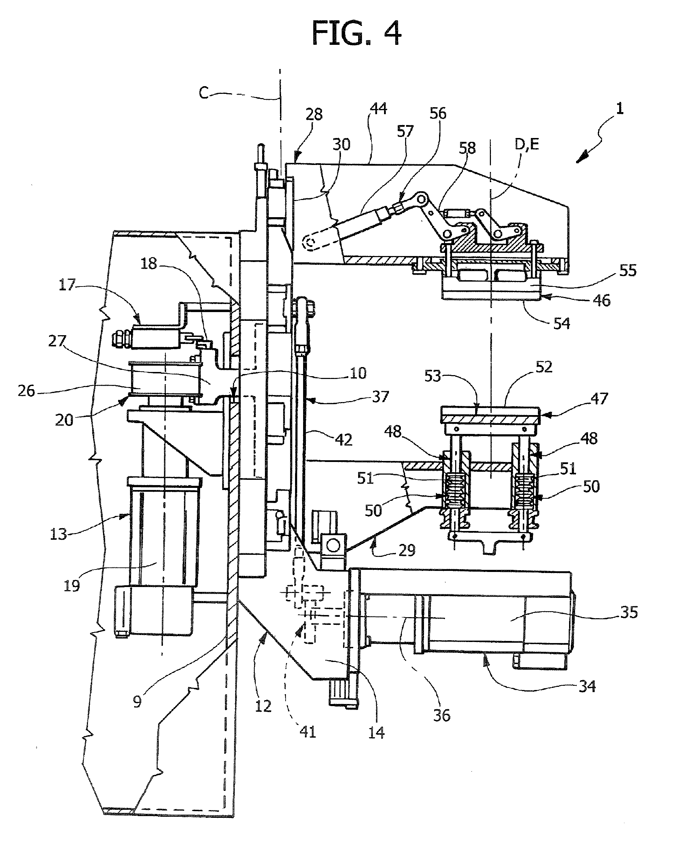

Assembly 1 comprises a fixed, flat supporting wall 9 parallel to axis 4 and having a straight intermediate slot 10 also parallel to axis 4. Wall 9 supports a "tracking" device 12 comprising an actuating device 13; and a carriage 14, which is fitted to the front face of wall 9, on two straight rails 15 located on opposite sides of slot 10, to run back and forth, under the control of device 13 and in a direction B parallel to axis 4, along a forward stroke in the same direction as arrow A, and a return stroke in the opposite direction to arrow A. The travel of carriage 14 is defined by two stops 16 fixed to wall 9 (Figure 3), and is controlled by a switch device 17 (Figure 4) fitted to the rear face of wall 9 and activated by a corresponding member 18 integral with carriage 14.

With reference to Figure 2, device 13 is fitted to the rear face of wall 9, and comprises a rotary electric motor 19 fixed to wall 9; and a belt transmission 20, in turn comprising a driven pulley 21 and a drive pulley 22 with respective axes perpendicular to direction B and parallel to wall 9. More specifically, pulley 22 is coaxial with motor 19.

Transmission 20 comprises a belt 26 looped about pulleys 21, 22 and fixed to a plate 27, which is integral with carriage 14, projects through slot 10, and supports member 18.

With reference to Figures 1 and 3, assembly 1 also comprises two slides 28, 29, in turn comprising respective rear plates 30, 31, which are coplanar with each other and fitted to carriage 14 on straight guides 32 to slide in a direction C perpendicular to direction B and parallel to wall 9.

Slides 28, 29 are moved back and forth linearly in opposite directions by an actuating device 34 carried by carriage 14 and comprising a rotary electric motor 35 fixed to carriage 14 and having an output axis 36 perpendicular to directions B and C.

Device 34 also comprises two connecting rod and crank transmissions 37, 38, in turn comprising respective cranks 39, 40, which are diametrically opposite with respect to axis 36, and form part of the same rocker arm lever 41 which is oscillated about axis 36 by motor 35. Transmissions 37, 38 also comprise respective connecting rods 42, 43, which are of different lengths and connected by spherical end joints to plates 30, 31 at one end, and to cranks 39, 40 at the other end.

With reference to Figures 1 and 4, slides 28, 29 also comprise respective arms 44, 45, which project from plates 30, 31, are located on opposite sides of the path of tube 3, and support respective heads 46, 47 facing each other in a direction D parallel to direction C. Head 46 is fixed to arm 44, while head 47 is fitted to arm 45 by means of two guides 48, so as to move in direction D in opposition to the elastic action of two packs 50 of springs, which are associated with respective guides 48, are therefore parallel to each other, and comprise respective numbers of disk springs 51.

Head 47 comprises two side by side corresponding portions 52 defining a slit 53 perpendicular to axis 4; and head 46 comprises two sealing members 54 (only one shown in Figure 4) which cooperate with respective portions 52 and are located on opposite sides of a knife 55, which is aligned with slit 53 and fitted to arm 44 to move in direction D under the control of an actuating device 56 housed inside arm 44 and therefore movable together with slide 28 and carriage 14.

With reference to Figure 4, device 56 comprises a fluidic actuator, in particular a pneumatic cylinder 57; and an articulated-parallelogram transmission 58, which is activated by cylinder 57, when heads 46, 47 grip tube 3, to move knife 55 between a withdrawn position inside head 46, and an extracted position inside slit 53, to separate two successive packages 59, after an edge 60 between packages 59 has been sealed between members 54 and portions 52.

With reference to Figures 1 and 3, assembly 1 also comprises an additional air expulsion device 61 located downstream from heads 46, 47 in the direction of arrow A, and comprising two facing, respectively top and bottom, pressure members 62, 63, and two pneumatic cylinders 64, 65, the housings 66, 67 of which are fixed to slides 28, 29 respectively, and the rods 68, 69 of which are coaxial with each other along an axis E parallel to direction D. Member 62 is defined by a plate integral with the end of rod 68; and member 63 comprises a support 70 integral with the end of rod 69, and two rollers 71, which have respective axes perpendicular to axes 4 and E, rotate idly with respect to support 70, and are located side by side along axis 4. Rods 68, 69 are movable axially between a withdrawn position, in which device 61 is deactivated and rollers 71 simply define a support for packages 59, and an extracted position (not shown), in which cylinders 64, 65 define respective gas springs.

In actual use, carriage 14 is moved along the forward stroke to reach the same travelling speed as tube 3, while motor 35, cylinders 57, 64, 65, and any sensors (not shown) of assembly 1 are powered electrically and/or pneumatically by flexible wiring not shown.

On reaching zero relative speed between carriage 14 and tube 3, motor 35 is operated to rotate lever 41 (anticlockwise in Figure 3), so as to move slides 28, 29 towards each other and bring heads 46, 47 into contact with tube 3 in an intermediate position between two consecutive products 2. By virtue also of the elastic action of packs 50 of springs, tube 3 is gripped between heads 46, 47 and sealed by members 54 along two portions defining the edges 60 of two successive end packages 59 along axis 4.

Shortly after the sealing operation, while tube 3 is still gripped by heads 46, 47, a cutting operation may be performed by extracting knife 55 towards slit 53 to separate the two packages 59. During the cutting operation, packs 50 of springs act as shock-absorbers, in the event knife 55 strikes the bottom of slit 53. Once two consecutive products 2 are packed, slides 28, 29 are parted by reversing motor 35, carriage 14 is reversed by reversing motor 19, and the same packing operations are repeated on the next portion of the tube.

For some types of products and packages (e.g. when packing sliced bread), air must be expelled from an empty portion of tube 3 (i.e. containing no products 2) at the end of a package 59 before it is sealed. In which case, device 61 is activated to move out rods 68, 69, so that, as slides 28, 29 move towards each other, and before heads 46, 47 contact tube 3, members 62, 63 grip and expel the air from said empty portion, while rollers 71 assist relative travel between tube 3 and members 62, 63 to avoid tearing or creasing tube 3.

By the end of the approach movement of slides 28, 29, the gas springs of device 61 are fully compressed, and tube 3 is gripped between heads 46, 47 and sealed and cut in the same way as described above.

As will be clear from the foregoing description, assembly 1 comprises a small number of component parts, and, since devices 34, 56, 61 move together with carriage 14 and are extremely straightforward, provides for accurately positioning the packing tools defined by members 54, knife 55, and members 63, 63. Assembly 1 itself is also extremely straightforward and relatively compact, by virtue also of the location of devices 34, 56, 13, the particular type of transmission 20 used, and the linear reciprocating movement of carriage 14, slides 28, 29, and knife 55.

By controlling motor 19, movement of the carriage can be regulated to adapt the packing system to products 2 of different types and sizes; and motor 35, cylinder 57 and cylinders 64, 65 may be controlled independently to either only seal the tube (to form a continuous strip of packages 59) or also perform the cutting and/or air expulsion operations.

Clearly, changes may be made to assembly 1 as described herein without, however, departing from the scope of the present invention.

In particular, heads 46, 47 may be of various types, e.g. induction, resistance, or ultrasound heat-seal heads, and/or knife 55 may be replaced by a different package separating tool, e.g. for forming a continuous or perforated tear line. The packing operations performed by assembly 1 may differ from those described, e.g. may comprise printing the packing date, and/or articles other than food products 2, referred to by way of example, may be packed.

One of devices 34, 56 may be fixed to wall 9, as opposed to being carried by carriage 14, and/or transmissions 20, 37, 38, 58 may differ from those described, e.g. may be cam or lever types, and/or movement of the packing tools may be curved and/or crosswise to axis 4, and/or slide 29 may be fixed with respect to carriage 14.

## Claims

1. An assembly (1) for packing products (2), in particular food products, arranged successively and spaced longitudinally apart inside a tube (3) of packing material travelling along a respective longitudinal axis (4); **characterized by** comprising:
- a carriage (14) movable back and forth, parallel to said longitudinal axis (4), along a forward stroke in the same direction as the travel of said tube (3), and along a return stroke in the opposite direction to the travel of said tube (3);
- a first tool (54) carried by said carriage (14) and movable, with respect to said carriage (14), to perform, along each said forward stroke, a first packing operation on said tube (3);
- at least one second tool (55), which differs from said first tool (54), is carried by said carriage (14), and is movable, with respect to said carriage (14), to perform, along each said return stroke, a second packing operation on said tube (3); and
- actuating means (34, 56) for moving said first (54) and said second (55) tool, respectively, to perform said first and said second packing operation respectively;
at least some of said actuating means (34, 56) being carried by said carriage (14).

2. An assembly as claimed in Claim 1, **characterized in that** said actuating means (34, 56) are carried entirely by said carriage (14).

3. An assembly as claimed in Claim 2, **characterized by** also comprising a first slide (28) supporting said first tool (54) and fitted to said carriage (14) to move, under the control of first actuating means (34), in a first direction (C) crosswise to said longitudinal axis (4); said second tool (55) being fitted to said first slide (28) to move, under the control of second actuating means (56), in a second direction (D) crosswise to said longitudinal axis (4).

4. An assembly as claimed in Claim 3, **characterized in that** said first actuating means (34) comprise a rotary motor (35) fixed to said carriage (14).

5. An assembly as claimed in Claim 4, **characterized in that** said first actuating means (34) comprise transmission means (37, 38) activated by said motor (35) to move said first slide (28) back and forth linearly in said first direction (C).

6. An assembly as claimed in Claim 5, **characterized by** also comprising a second slide (29), which is fitted to said carriage (14) to move in said first direction (C), is activated by said transmission means (37, 38) to move in the opposite direction to said first slide (28), and supports at least one corresponding tool (52) for said first (54) and said second (55) tool.

7. An assembly as claimed in Claim 5 or 6, **characterized in that** said transmission means comprise at least one connecting rod and crank transmission (37, 38).

8. An assembly as claimed in Claims 6 and 7, **characterized in that** said transmission means (37, 38) comprise two diametrically opposite cranks (39, 40), each for translating a relative said slide (28, 29).

9. An assembly as claimed in Claim 8, **characterized in that** said cranks (39, 40) form part of a single rocker arm lever (41) oscillated by said motor (35).

10. An assembly as claimed in any one of Claims 6 to 9, **characterized by** comprising elastic means (50) interposed between said corresponding tool (52) and said second slide (29), and exerting, on said corresponding tool (52), an elastic force directed towards said first slide (28).

11. An assembly as claimed in Claim 10, **characterized in that** said elastic means (50) comprise a number of disk springs (51) arranged in series.

12. An assembly as claimed in any one of Claims 3 to 11, **characterized in that** said second actuating means (56) are carried by said first slide (28).

13. An assembly as claimed in Claim 12, **characterized in that** said second actuating means (56) are housed in said first slide (28).

14. An assembly as claimed in Claim 12 or 13, **characterized in that** said second actuating means (56) comprise a lever transmission (58).

15. An assembly as claimed in Claim 14, **characterized in that** said lever transmission comprises an articulated parallelogram (58).

16. An assembly as claimed in any one of the foregoing Claims, **characterized in that** said second actuating means (56) comprise a fluidic actuating device (57).

17. An assembly as claimed in Claim 16, **characterized in that** said fluidic actuating device (57) comprises a pneumatic cylinder (57).

18. An assembly as claimed in any one of the foregoing Claims, **characterized in that** said first (C) and said second (D) direction are parallel to each other and perpendicular to said longitudinal axis (4).

19. An assembly as claimed in any one of the foregoing Claims, **characterized by** comprising a belt transmission (20) for moving said carriage (14) back and forth linearly.

20. An assembly as claimed in any one of the foregoing Claims, **characterized in that** said first tool is defined by at least one sealing member (54).

21. An assembly as claimed in Claim 20, **characterized in that** said second tool is defined by at least one package separating tool (55).

22. An assembly as claimed in any one of the foregoing Claims, **characterized by** comprising at least one pressure member (62, 63) for expelling air from said tube (3).
